# EUROPEAN PATENT SPECIFICATION

(11) **EP 2 011 356 B1**
(45) Date of publication and mention of the grant of the patent: **17.11.2010**
(21) Application number: 06736527.0
(22) Date of filing: 01.03.2006
(51) Int. Cl.: H04W 16/10

(54) **METHOD AND APPARATUS FOR SENSING CHANNEL AVAILABILITY IN WIRELESS NETWORKS**
VERFAHREN UND VORRICHTUNG ZUM ERFASSEN DER KANALVERFÜGBARKEIT IN DRAHTLOSEN NETZEN
PROCÉDÉ ET APPAREIL PERMETTANT DE DÉTECTER UNE DISPONIBILITÉ DE CANAL DANS DES RÉSEAUX SANS FIL

(43) Date of publication of application: 07.01.2009
(73) Proprietor: Thomson Licensing, 92130 Issy-les-Moulineaux (FR)
(72) Inventor: LIU, Hang, Yardley, Pennsylvania 19067 (US); GAO, Wen, West Windsor, New Jersey 08550 (US)
(74) Representative: Ruellan-Lemonnier, Brigitte
(86) International application number: PCT/US2006/007221
(87) International publication number: WO 2007/100323

(56) References cited:
- EP-A1- 1 439 725
- BENKO J., CHEONG Y.C., CORDEIRO C., GAO W., KIM H-S., KUFFNER S., LASKAR J., LIANG Y-C.: "A PHY/MAC Proposal for IEEE 802.22 WRAN Systems Part 2: The Cognitive MAC" IEEE P802.22 WIRELESS RANS, [Online] 23 February 2006 (2006-02-23), pages 1-221, XP002404757 Retrieved from the Internet: URL:http://www.ieee802.org/22/Meeting_docu ments/2006_Mar/22-06-0003-03-0000_ETRI-FT- I2R-Motorola-Philips-Samsung-Thomson_MAC_S pec.doc> [retrieved on 2006-10-26]
- HU W., SOFER E., SEGAL Y.: "IEEE 802.22 Wireless RAN Standard PHY and MAC Proposal" IEEE P802.22 WIRELESS RANS, [Online] 9 January 2006 (2006-01-09), pages 1-60, XP002404758 Retrieved from the Internet: URL:http://www.ieee802.org/22/Meeting_docu ments/2006_Jan/22-05-0098-01-0000_STM-Runc om_PHY-MAC_Outline.doc> [retrieved on 2006-10-26]

## Description

### FIELD OF THE INVENTION

The present invention relates to cognitive wireless networks and particularly to a method and apparatus for sensing channel availability in a cognitive wireless network, e.g. a wireless regional area network (WRAN).

### BACKGROUND OF THE INVENTION

In wireless regional area networks (WRAN), the base station (BS) and associated customer premise equipment (CPE) actively detect the presence of incumbent licensed users or other WRAN systems in the operating frequncy band/channel currently being used by the base station and the CPE. If licensed incumbent users are detected, the WRAN needs to switch to another channel to avoid interference with the incumbents. If other WRANs are detected, the WRAN may also switch to another channel to avoid interference between WRANs and allow WRANs to coexist in the spectrum.

A WRAN needs to stop transmitting on the channel it is currently using for operations (transmission/reception), i.e. to become quiet, in order to detect/sense whether an incumbent or another WRAN is also operating on the same channel. This results in service/operation disruption and reduction in WRAN throughput. Furthermore, this procedure introduces delay and the BS/CPE needs to buffer the data during the quiet/sensing time.

In some proposals, a quiet time period is scheduled periodically. The WRAN system senses the channel at the quiet time. This approach results in service disruption. The WRAN system cannot transmit data during the quiet time. The data must be buffered at the base stations and CPEs, which introduces delay and higher buffer requirements. Delay may not be tolerable by the real-time traffic such as voice and video applications.

In another proposal, periodic channel hopping was used. In this scheme, the WRAN periodically changes its operating channel. When it hops to a new channel, channel sensing can be performed on the old operating channel. With this approach, the WRAN operates in a channel for a fixed time before hopping to another channel. If there are multiple WRANs sharing multiple channels, this approach requires a complex scheduling scheme for channel hopping. Otherwise, two or more WRANs may hop to the same channel, which may cause a collision and interference between WRANs for the whole frequency hopping period.

D1 (XP 002404757) is a proposal for a wireless RAN PHY and MAC that discloses the actions a WRAN system should take when it decides to switch to another channel

D2 (XP 002404758) is a proposal for a wireless RAN PHY and MAC that relates to RF sensing to determine channel occupancy. It proposes selective overlap to maintain data transmission while sensing other channels. In particular it discloses a dynamic frequency selection mechanism where a CPE selects the best frequency available at a time

D3 (EP 1 439 725 A1) relates to a cell phone transition from a 3G network, which maintains a video and audio connection, to a 2G network which maintains only an audio connection.

### SUMMARY OF THE INVENTION

The present invention is a method and aparatus to sense/detect the channel availability without interrupting the transmission operation of the WRAN. The WRAN first switches to another channel (selected from a list of candidate/backup channels) from its current operating channel (Cop). The WRAN then senses the formerly current operating channel (Cop) while using the candidate channel (Cca) for operation (transmission/reception). If the former current operating channel (Cop) is determined to be available (no incumbent or other WRAN was sensed using the former current channel (Cop)), the WRAN switches back to the former current operating channel (Cop).

The WRAN periodically scans the channels and detects/senses the presence of licensed incumbents and other WRANs. If licensed incumbent users are detected, the WRAN switches to another channel to avoid interfering with the incumbent users. If other WRANs are detected, the WRANs resolve the interference introduced by each other in such a way as to allow fair resource sharing. Thus, the problems solved by the present invention are to perform channel sensing in such a way as to avoid interfering with incumbent users or other WRANs and to simultaneously avoid delays and service disruptions as well as to avoid the necessity for additional buffering.

A method and apparatus for sensing channel availability in a wireless network are described including switching to a first candidate channel for operational data transmission and reception sensing a previous operating channel for availability, determining if the previous operating channel is available, switching back to the previous operating channel if the previous operating channel is available and one of continuing to use the candidate channel for operational data transmission and reception and immediately switching to a second candidate channel for operational data transmission and reception and switching to the second candidate channel for operational data transmission and reception after a pre-determined period of time. Also described is a system for sensing channel availability in a cognitive network including an RF unit, for switching channels, a sensing unit for sensing channel availability and a media access control unit for controlling the sensing unit and the RF unit.

### BRIEF DESCRIPTION OF THE DRAWINGS

The present invention is best understood from the following detailed description when read in conjunction with the accompanying drawings. The drawings include the following figures briefly described below where like-numbers on the figures represent similar elements:
Fig. 1A is a schematic diagram of an exemplary cognitive network (wireless regional area network).
Fig. 1B is a flowchart illustrating the channel sensing procedure in accordance with the principles of the present invention.
Fig. 2A is a ladder diagram showing the channel sensing procedure and signaling between a base station and customer premises equipment when the candidate channel (Cca) and current operating channel (Cop) are available in accordance with the principles of the present invention.
Fig. 2B is a timing diagram of the method shown in Fig. 2A.
Fig. 3A is a ladder diagram depicting the channel sensing procedure and signaling between a base station and customer premises equipment when the candidate channel (Cca) is not available in accordance with the principles of the present invention.
Fig. 3B is a timing diagram of the method shown in Fig. 3A.
Fig. 4A is a ladder diagram illustrating the channel sensing procedure and signaling between a base station and customer premises equipment when the current operating channel (Cop) becomes unavailable in accordance with the principles of the present invention Fig. 4B is a timing diagram of the method shown in Fig. 4A.
Fig. 5 is a ladder diagram depicting an alternative embodiment for channel sensing and signaling between a base station and customer premises equipment in accordance with the principles of the present invention.
Fig. 6 is a block diagram of a wireless regional area network customer premise equipment and base station in accordance with the present invention.

### DETAILED DESCRIPTION OF THE PREFERRED EMBODIMENTS

A cognitive network utilizing the unoccupied digital TV (DTV) spectrum in VHF/UHF band is being developed under the auspices of the IEEE (IEEE 802.22). This network is termed as a wireless regional area network (WRAN) due to its regional coverage. The network cannot cause any harmful interference to the licensed incumbent signals such as DTV signals and wireless microphone signals. In addition, the network needs to support the coexistence of multiple WRANs operating in the same region.

When a WRAN (base station and its associated CPE) senses its current operating channel, it needs to stop transmitting (keep quiet) on this channel in order to detect whether the incumbent or other WRANs operate on this channel. This results in service/operation disruption and reduce the WRAN throughput. During the quiet period, the WRAN system can not transmit data. The data must be buffered at the base stations and CPEs during the quiet period, which introduces delay and increases required buffering. Delays may not be tolerable for real-time traffic, such as voice and video applications.

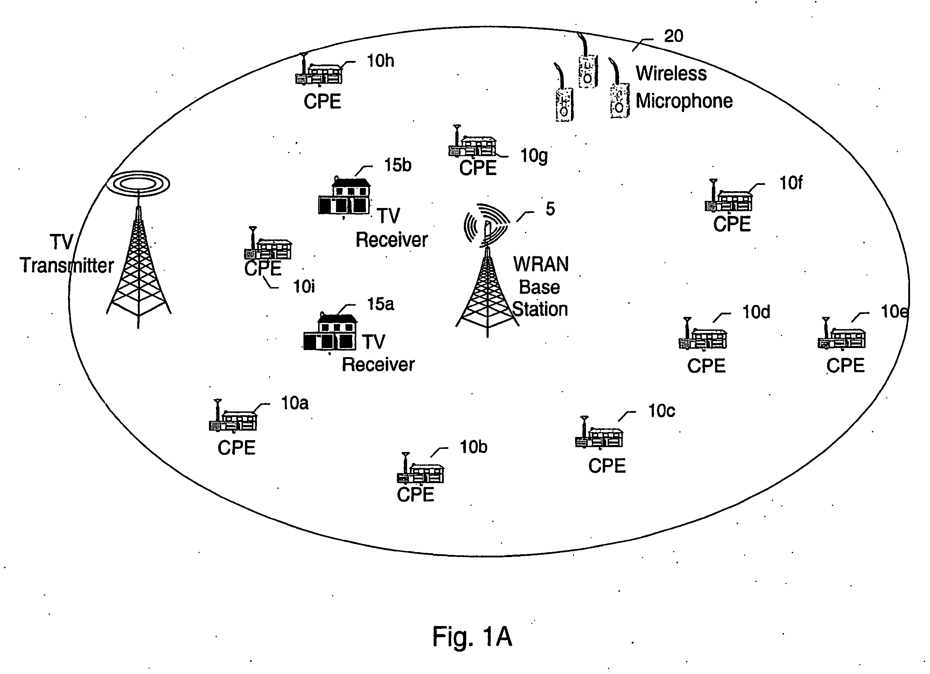

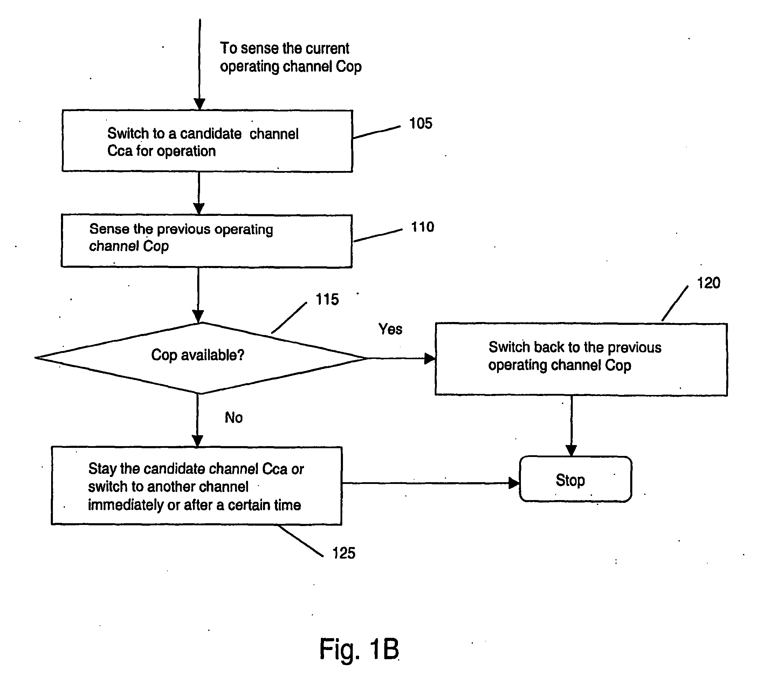

The present invention is a method and apparatus to sense/detect channel availability without interrupting the operation (transmission/reception) of the WRAN. The method and apparatus of the present invention are initiated and controlled by a switch and sense control/management message/signal generated and transmitted by a WRAN base station to its associated CPE units. Fig. 1A is a schematic diagram of a wireless regional area nework. A WRAN is a fixed point to multipoint network where the WRAN base station 5 communicates with multiple WRAN CPE units 10a - 10i. In the coverage area of a WRAN, there may be incumbent users, such as TV receivers 15 a, 15b and wireless microphone users 20. There may also be other WRANs (not shown) in the region. As shown in Fig. 1B, the WRAN first switches to another candidate/backup channel (Cca) from its current operating channel (Cop) at 105. The WRAN then senses the previous operating channel (former current operating channel (Cop)) at 110 while using the candidate channel for data transmission/reception. If the previous operating channel (Cop) is determined to be available to operate (no incumbent and other WRANs are using the Cop) at 115, then the WRAN switches back to the previous operating channel (Cop) at 120. If not, the WRAN continues to use the candidate channel (Cca) or in the alternative, switches to another channel immediately or alternatively using the candidate channel for a pre-determined period of time, T at 125.

When a WRAN is operating in a channel, it not only senses the current operating channels but also other channels. Based on the channel sensing results, a backup/candidate channel list, which contains channels free of incumbent users and other WRANs, is generated/built.

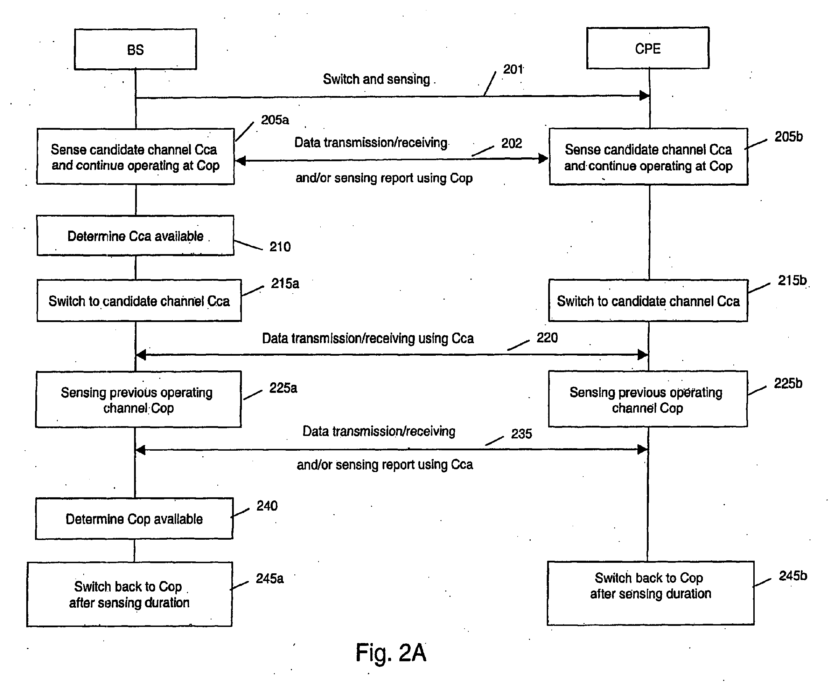

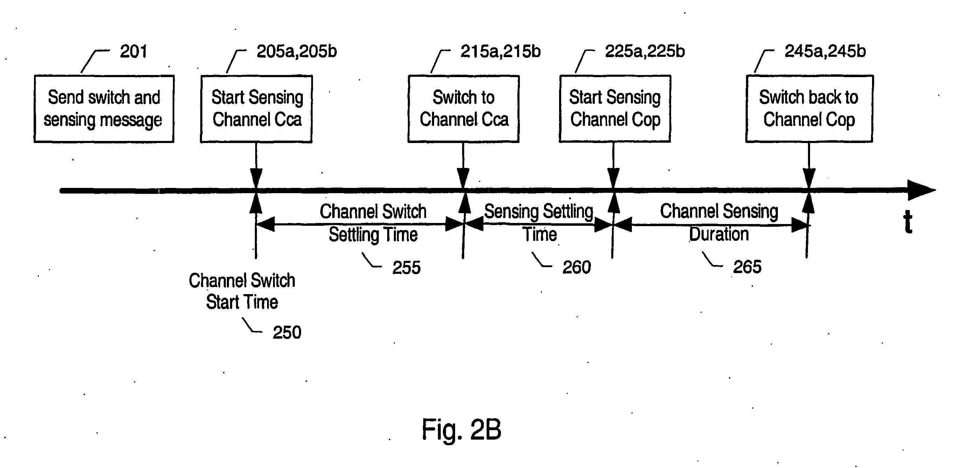

Fig. 2A is a ladder diagram showing the channel sensing procedure and signaling between a base station and customer premises equipment when the candidate channel (Cca) and current operating channel (Cop) are available in accordance with the principles of the present invention. Fig. 2B is a timing diagram of the method shown in Fig. 2A. Fig. 2B is a timing diagram showing some of the operations of the ladder diagram and clarifying the timing of the operations.

As shown in Figs. 2A and 2B, when a base station of a WRAN wants to sense its current operating channel Cop, the base station sends a control/management message/signal (called a switch and sensing control message/signal) to all associated CPE units at 201. The control/management message/signal for each channel sensing period includes the message ID, the channel switch start time, the channel switch settling time, the sensing settling time, the sensing duration, the ID of the candidate operating channel Cca. At the channel switch start time 250, the BS and the CPE units continue operating in the current operating channel Cop at 202. During the channel switch settling time 255, the base station and the CPE units start sensing the candidate operating channel (Cca) at 205a, 205b. If the candidate operating channel Cca is available (no incumbent users or interference are detected during the channel switch settling time 255) at 210, at the channel switch start time 250 plus the channel switch settling time 255, the BS and the CPE units switch to the candidate channel Cca at 215a, 215b. The WRAN then operates (transmits/receives) on the candidate channel Cca at 220. If at the channel switch start time 250 plus the channel switch settling time 255, the WRAN switches to the candidate operating channel Cca, at the channel switch start time 250 plus the channel switch settling time 255 plus the sensing settling time 260, the BS and the CPE units start sensing the previous operating channel Cop during the channel sensing duration 265 at 225a, 225b and the CPE units report the channel sensing results to the BS over the candidate channel Cca along with operational data exchanged between the base station and the CPE units at 235. If the BS determines that the previous operating channel Cop is available at 240, the WRAN switches back to the previous operating channel Cop at the channel switch start time 250 plus the channel switch settling time 255 plus the sensing settling time 260 plus the channel sensing duration period 265 at 245a, 245b.

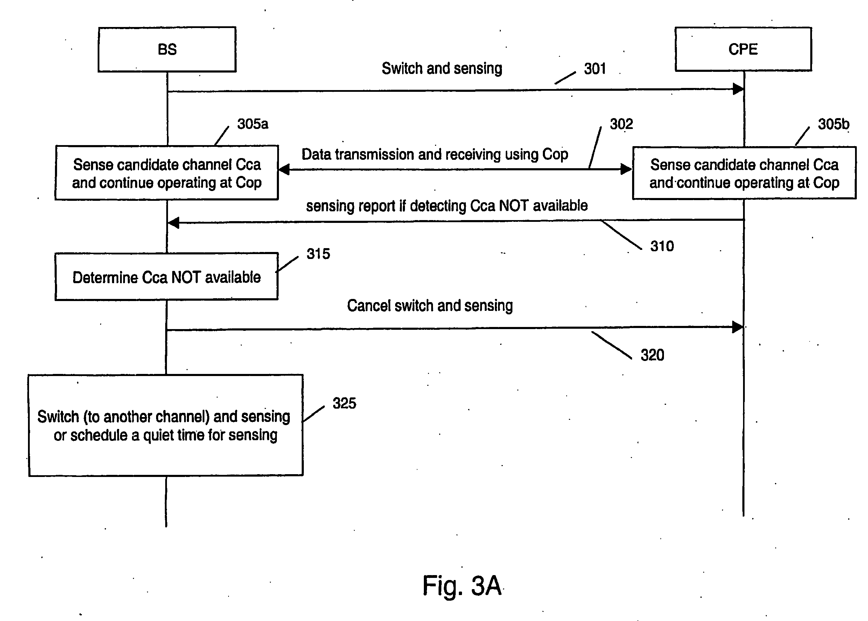

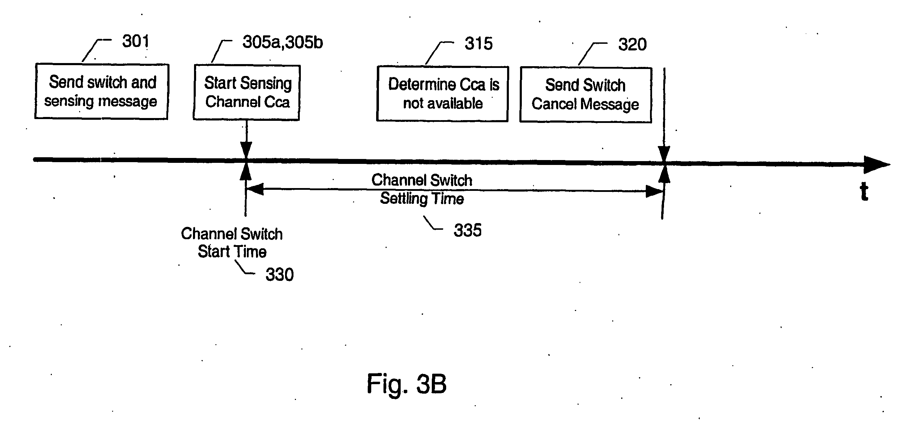

Fig. 3A is a ladder diagram depicting the channel sensing procedure and signaling between a base station and customer premises equipment when the candidate channel (Cca) is not available in accordance with the principles of the present invention. Fig. 3B is a timing diagram of the method shown in Fig. 3A. Fig. 3B is a timing diagram showing some of the operations of the ladder diagram and clarifying the timing of the operations.

As shown in Figs. 3A and 3B, when a base station of a WRAN wants to sense its current operating channel Cop, the base station sends a switch and sensing control message/signal (control/management message/signal) to all associated CPE units at 301. The control/management message for each channel sensing period includes the message ID, the channel switch start time, the channel switch settling time, the sensing settling time, the sensing duration, the ID of the candidate operating channel Cca. At the channel switch start time 330, the BS and the CPE units continue operating in the current operating channel Cop at 302. During the channel switch settling time 335, the base station and the CPE units start sensing the candidate operating channel Cca at 305a, 305b. The BS may detect incumbent users or interference on the candidate channel Cca during the channel switch settling time 335. The CPE may also detect incumbent users or interfence on the candidate channel Cca during the channel switch settling time 335. If a CPE detects incumbent users or interfence on the candidate channel Cca during the channel switch settling time 335, the CPE reports to the BS at 310. If the BS determines that the candidate channel Cca is unavailable at 315, if possible, the BS cancels the switch and sensing action by sending a control/management message called switch cancel control message/signal to the CPE units on the operating channel Cop at 320. The switch cancel message includes the message ID, the previous control/management message ID (i.e. the ID of the previous switch and sensing message) that this switch cancel message seeks to cancel, and the ID of the channel that the WRAN would switch to (the Cca ID in this case) if this cancel message was not issued. The switch cancel control message/signal cancels the previously transmitted switch and sense control message/signal and any unexecuted steps/actions resulting from the previously transmitted switch and sense control message/signal. If the switch and sensing is canceled, the BS may select another candidate channel to which to switch in order to perform channel sensing on the current operating channel Cop at 325. Alternatively, if the switch and sensing is canceled, the BS may schedule a quiet period for channel sensing, but the WRAN does not switch to another channel during a sensing duration period. In the latter approach, the WRAN cannot transmit data during the quiet period.

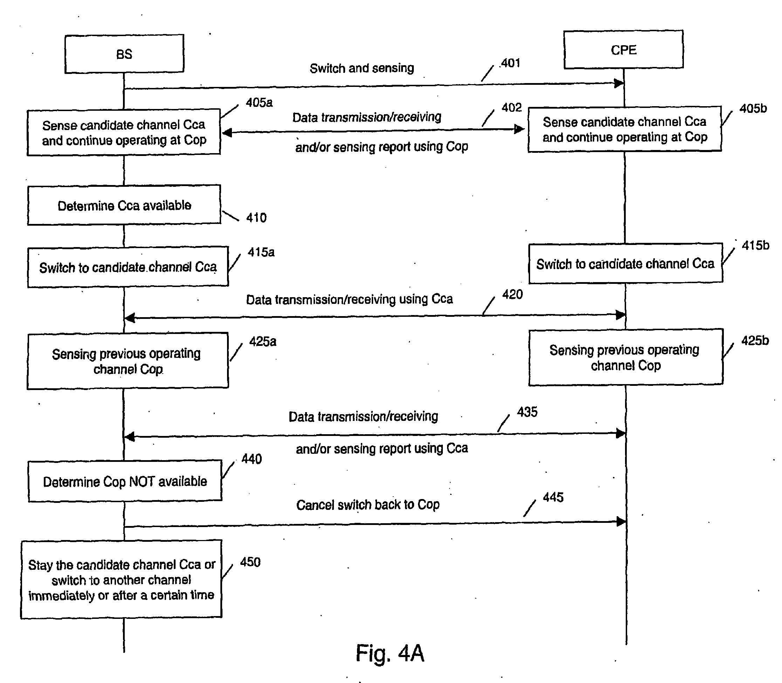

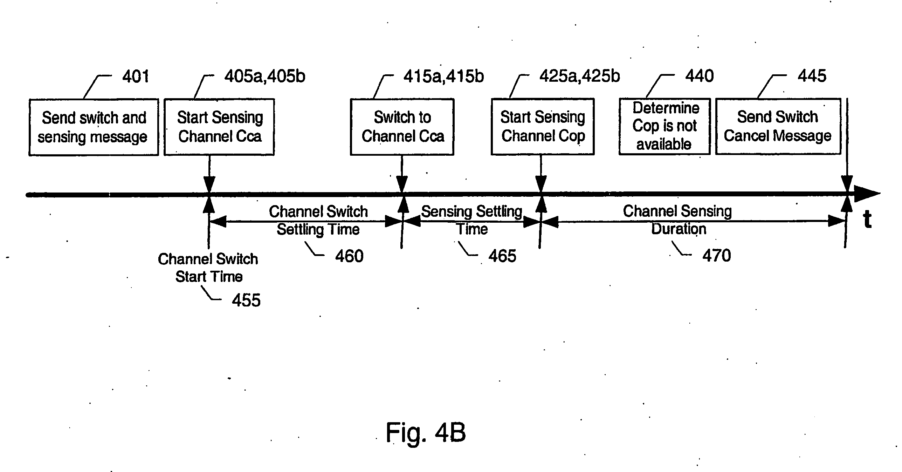

Fig. 4A is a ladder diagram illustrating the channel sensing procedure and signaling between a base station and customer premises equipment when the current operating channel (Cop) becomes unavailable in accordance with the principles of the present invention. Fig. 4B is a timing diagram of the method shown in Fig. 4A. Fig. 4B is a timing diagram showing some of the operations of the ladder diagram and clarifying the timing of the operations.

As shown in Figs. 4A and 4B, when a base station of a WRAN wants to sense its current operating channel Cop, the base station sends a switch and sensing control message/signal (control/management message/signal) to all associated CPE units at 401. The control/management message/signal for each channel sensing period includes the message ID, the channel switch start time 455, the channel switch settling time 460, the sensing settling time 465, the channel sensing duration 470, the ID of the candidate operating channel Cca. At the channel switch start time 455, the BS and the CPE units continue operating in the current operating channel Cop at 402. During the channel switch settling time 460, the base station and CPE unit start sensing the candidate operating channel Cca at 405a, 405b. If the candidate operating channel Cca is available (no incumbent user or interference is detected during the channel switch settling time 460) 410, at the channel switch start time 455 plus the channel switch settling time 460, the BS and the CPE units switch to the candidate operating channel Cca 415a, 415b. The WRAN operates (transmits/receives) on the candidate channel Cca 420. If at the channel switch start time 455 plus the channel switch settling time 460, the WRAN switches to the candidate operating channel Cca, at the channel switch start time 455 plus the channel switch settling time 460 plus the sensing settling time 465, the BS and the CPE units start sensing the previous operating channel Cop 425a, 425b during the channel sensing duration period 470 and the CPE units report the channel sensing results to the BS using the candidate channel Cca along with operational data exchanged between the base station and the CPE units at 435. If the CPE detects incumbent users or interference on the Cop during the channel sensing duration period 470 and thus the previous operating channel Cop is not available at 440, the BS issues a switch cancel message/signal to cancel the channel switch and sense message (control/management message/signal) and switch back to the previous operating channel Cop at 445. The switch cancel message/signal includes the message ID, the previous control/management message ID (i.e. the ID of the previous switch and sensing control message/signal) that this switch cancel message/signal seeks to cancel, and the ID of the channel that the WRAN would switch to (Cop in this case) if this cancel message was not issued. The switch cancel control message/signal cancels the previously transmitted switching back and sense control message/signal and any unexecuted steps/actions resulting from the previously transmitted switching back and sense control message/signal. If the previous operating channel Cop becomes unavailable, the WRAN may continue to operate on the candidate operating channel Cca or in the alternative switch to another channel immediately or alternatively using the candidate for a pre-determined period of time, T at 450.

If the WRAN (BS and CPEs) cannot communicate over the candidate channel Cca after switching to Cca, the WRAN (BS and CPEs) sense the previous operating channel Cop for the channel sensing duration period, starting at the channel switch start time plus the channel switch settling time plus the sensing settling time. In this case, the sensing duration is treated as the quiet time. After sensing, the BS and the CPEs may switch back to the Cop or take other actions.

Multiple WRANs, i.e. multiple base stations and their associated CPE units may be synchronized. These WRANs may have a physical or logical control channel among them. In this case, the above switch and sensing method can be performed in a synchronized way. When multiple synchronized WRANs operate in a shared channel/frequency band, they can perform the switch and sense method synchronously, for example, switching away from the shared operating channel simultaneously, to give the shared operating channel a "quiet" time. The channel sensing on the shared operating channel can then be performed and incumbent users (licensed users) will be able to be detected.

In alternative embodiments, it is possible that the channel switch settling time is set to zero or a fixed value. In this scenario, it is possible that the channel switch settling time is not included in the switch and sensing control/management message/signal if the channel switch settling time is set to zero or a fixed value. In yet another alternative embodiemnt, it is also possible to set the channel switch settling time to a fixed value plus a random value. The random value can be obtained from a window [tw_min, tw_max]. Furthermore, it is possible in yet another alternative embodiment that the sensing settling time is set to zero or a fixed value. In this scenario, it is possible that the sensing settling time is not included in the switch and sensing control/management message/signal if it is set to zero or a fixed value. In yet another alternative embodiment, it is possible that the channel sensing duration period is set to a fixed value. In this scenario, it is possible that the channel sensing duration period is not included in the switch and sensing control/management message/signal if it is set to a fixed value. In another alternative embodiment, the channel switch start time is not included in the switch and sensing control/management message/signal, which means that the channel switch and sensing procedure described above starts immediately after the BS sends the switch and sensing control/management message and the CPE units receive the switch and sensing control/management message.

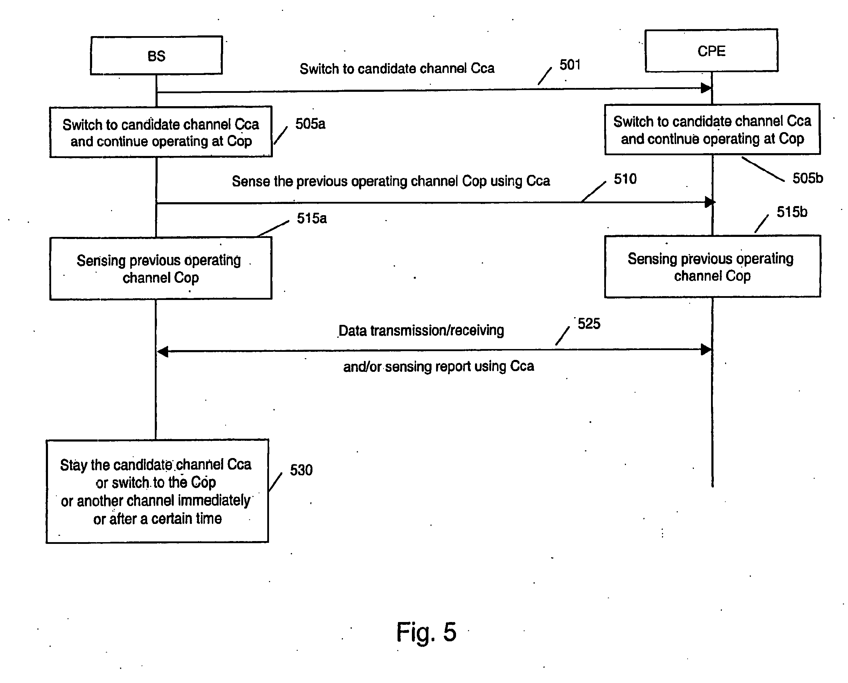

As shown in Fig. 5, another alternative embodiment is that the BS sends a channel switch control/management message/signal to the CPE units at 501 to switch the WRAN to the candidate operating channel at 505a, 505b. When the WRAN operates in the candidate operating channel, the BS senses the previous operating channel Cop at 510 and issues a sensing control/management message/signal to instruct the CPE units to sense the previous operating channel Cop at 515a, 515b. The CPE units report the channel sensing results to the BS using the candidate operating channel Cca along with operational data exchanged between the base station and the CPE units at 525. Based on the channel sensing results, the BS may determine the WRAN continues operating on the candidate operating channel Cca, or in the alternative switches to the previous operating channel Cop or alternatively switch to another channel immediately or using the candidate for a pre-determined period of time, T at 530. The BS and the CPE units may also scan to locate other candidate operating channels to which to switch.

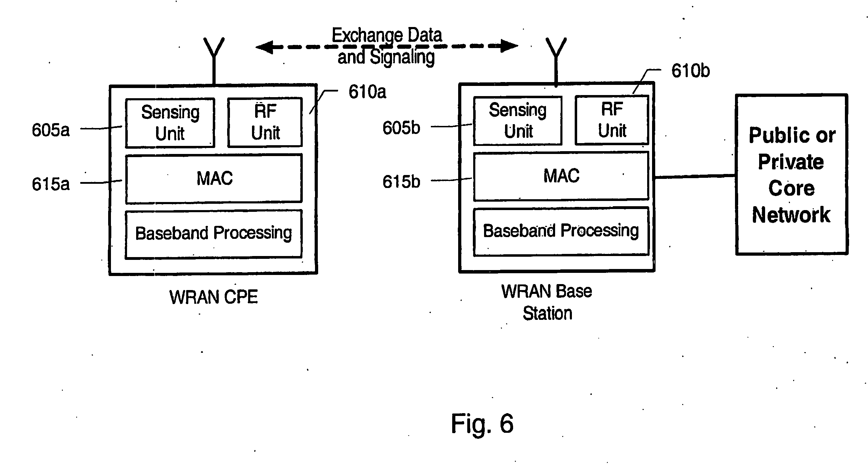

Fig. 6 is a block diagram of a wireless regional area network customer premise equipment and base station in accordance with the present invention. In both a WRAN base station and WRAN CPE units, there are four major components: sensing unit 605a, 605b; RF unit 610a, 610b; media access control (MAC) unit 615a, 615b; and baseband processing unit 620a, 620b. The first three of the above-identified components are the subject of the present invention. The MAC unit controls the sensing unit, which senses the channel to determine if there are incumbent users, other WRANs or interference. The MAC unit also controls the RF unit, which actually switches channels in order to perform the channel sensing operations in accordance with the present invention as described above. In a WRAN, the CPE units are under the control of the base station with which they are associated. The control is effected through data and signaling exchanges.

It is to be understood that the present invention may be implemented in various forms of hardware, software, firmware, special purpose processors, or a combination thereof. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present,invention is programmed. Given the teachings herein, one of ordinary skill in the related art will be able to contemplate these and similar implementations or configurations of the present invention.

## Claims

1. A method for sensing channel availability in a wireless network, said method comprising:
switching from a previous operating channel to a first candidate channel for operational data transmission and reception (105), said first candidate channel being available;
sensing said previous operating channel for availability (110);
determining if said previous operating channel is available (115);
if said previous operating channel is available, switching back to said previous operating channel (120); and
if said previous operating channel is not available, either continuing to use said first candidate channel for operational data transmission and reception or switching to a second candidate channel for operational data transmission and reception after a pre-determined period of time (125).

2. The method according to claim 1, further comprising receiving a channel sensing report for said previous operating channel on said first candidate channel.

3. The method according to claim 1, further comprising:
transmitting a switch and sense control message;
sensing said first candidate channel for availability; and
determining if said first candidate channel is available.

4. The method according to claim 3, wherein if said first candidate channel is not available, further comprising:
transmitting a switch cancel control message;
selecting a second candidate channel;
permitting sensing of said previous operational channel by performing one of switching to said second candidate channel for operational data transmission and reception and scheduling a quiet time for sensing said previous operational channel.

5. The method according to claim 1, further comprising transmitting a switch cancel control message to cancel switching back to said previous operating channel, if said previous operating channel is not available.

6. The method according to claim 3, wherein said sensing of said first candidate channel commences at a channel switch start time and continues through a channel switch settling time period, wherein said switching to said first candidate channel commences at a channel switch start time plus a channel switch settling time period, wherein said sensing of said previous operation channel commences at a channel switch start time plus a channel switch settling time period plus a sensing settling time period and continues through a channel sensing duration time period, wherein said switching back to said previous operation channel commences at a channel switch start time plus a channel switch settling time period plus a sensing settling time period plus a channel sensing duration time period, wherein said continuing to use said first candidate channel for operational data transmission and reception commences at a channel switch start time plus a channel switch settling time period plus a sensing settling time period plus a channel sensing duration time period, wherein said immediately switching to said second candidate channel for operational data transmission commences at a channel switch start time plus a channel switch settling time period plus a sensing settling time period plus a channel sensing duration time period and, wherein said reception and switching to said second candidate channel for operational data transmission and reception after a pre-determined period of time commences at a channel switch start time plus a channel switch settling time period plus a sensing settling time period plus a channel sensing duration time period.

7. The method according to claim 4, wherein said transmitting said switch cancel control message during a channel switch settling time period.

8. The method according to claim 5, wherein said transmitting of said switch cancel control message during a channel sensing duration time period.

9. The method according to claim 1, wherein said steps are initiated and controlled by a switch and sense control message.

10. The method according to claim 4, wherein said switch cancel control message cancels said previously transmitted switch and sense control message and any unexecuted steps resulting from said previously transmitted switch and sense control message.

11. The method according to claim 5, wherein said switch cancel control message cancels said switching back to said previous operating channel.

12. An apparatus for sensing channel availability in a wireless network, comprising:
means for switching from a previous operating channel to a first candidate channel for operational data transmission and reception; said first candidate channel being available;
means for sensing said previous operating channel for availability;
means for determining if said previous operating channel is available;
means for switching back to said previous operating channel if said previous operating channel is available; and
means for either continuing to use said first candidate channel for operational data transmission and reception or switching to a second candidate channel for operational data transmission and reception after a pre-determined period of time, if said previous operating channel is not available.

13. The apparatus according to claim 12, further comprising means for receiving a channel sensing report for said previous operating channel on said first candidate channel.

14. The apparatus according to claim 12, further comprising:
means for transmitting a switch and sense control signal;
means for sensing said first candidate channel for availability: and
means for determining if said first candidate channel is available.

15. The apparatus according to claim 14, wherein if said first candidate channel is not available, further comprising:
means for transmitting a switch cancel control signal;
means for selecting a second candidate channel;
means for permitting sensing of said previous operational channel by performing one of switching to said second candidate channel for operational data transmission and reception and scheduling a quiet time for sensing said previous operational channel.

16. The apparatus according to claim 12, further comprising means for transmitting a switch cancel control signal to cancel switching back to said previous operating channel control signal, if said previous operating channel is not available.

17. The apparatus according to claim 12, wherein said means are initiated and controlled by a switch and sense control signal.

18. The apparatus according to claim 15, wherein said switch cancel control signal cancels said previously transmitted switch and sense control signal and any unexecuted actions resulting from said previously transmitted switch and sense control signal.

19. The apparatus according to claim 16, wherein said switch cancel control signal cancels said switching back to said previous operating channel.

## Patentansprüche

1. Verfahren zum Abtasten der Kanalverfügbarkeit in einem drahtlosen Netz, wobei das Verfahren umfasst:
Umschalten von einem vorhergehenden Betriebskanal zu einem ersten Anwärterkanal für die Betriebsdatensendung und
für den Betriebsdatenempfang (105), wobei der erste Anwärterkanal verfügbar ist;
Abtasten des vorhergehenden Betriebskanals auf Verfügbarkeit (110);
Bestimmen, ob der vorhergehende Betriebskanal verfügbar ist (115);
falls der vorhergehende Betriebskanal verfügbar ist, Zurückschalten zu dem vorhergehenden Betriebskanal (120); und
falls der vorhergehende Betriebskanal nicht verfügbar ist, entweder Weiterverwenden des ersten Anwärterkanals für die Betriebsdatensendung und für den Betriebsdatenempfang oder Umschalten zu einem zweiten Anwärterkanal für die Betriebsdatensendung und für den Betriebsdatenempfang nach einer vorgegebenen Zeitspanne (125).

2. Verfahren nach Anspruch 1, das ferner das Empfangen eines Kanalabtastberichts für den vorhergehenden Betriebskanal auf dem ersten Anwärterkanal umfasst.

3. Verfahren nach Anspruch 1, das ferner umfasst:
Senden einer Umschalt- und Abtaststeuernachricht;
Abtasten des ersten Anwärterkanals auf Verfügbarkeit; und
Bestimmen, ob der erste Anwärterkanal verfügbar ist.

4. Verfahren nach Anspruch 3, das, falls der erste Anwärterkanal nicht verfügbar ist, ferner umfasst:
Senden einer Umschaltabbruch-Steuernachricht;
Auswählen eines zweiten Anwärterkanals;
Zulassen des Abtastens des vorhergehenden Betriebskanals durch Ausführen entweder des Umschaltens zu dem zweiten Anwärterkanal für die Betriebsdatensendung und für den Betriebsdatenempfang oder des Festsetzens einer Ruhezeit für das Abtasten des vorhergehenden Betriebskanals.

5. Verfahren nach Anspruch 1, das ferner das Senden einer Umschaltabbruch-Steuernachricht zum Abbrechen des Zurückschaltens zu dem vorhergehenden Betriebskanal umfasst, falls der vorhergehende Betriebskanal nicht verfügbar ist.

6. Verfahren nach Anspruch 3, bei dem das Abtasten des ersten Anwärterkanals bei einer Kanalumschalt-Startzeit beginnt und über eine Kanalumschalt-Ausregelzeitspanne fortgesetzt wird, wobei das Umschalten zu dem ersten Anwärterkanal bei einer Kanalumschalt-Startzeit plus einer Kanalumschalt-Ausregelzeitspanne beginnt, wobei das Abtasten des vorhergehenden Betriebskanals bei einer Kanalumschalt-Startzeit plus einer Kanalumschalt-Ausregelzeitspanne plus einer Abtast-Ausregelzeitspanne beginnt und über eine Kanalabtastdauer-Zeitspanne fortgesetzt wird, wobei das Zurückschalten zu dem vorhergehenden Betriebskanal bei einer Kanalumschalt-Startzeit plus einer Kanalumschalt-Ausregelzeitspanne plus einer Abtast-Ausregelzeitspanne plus einer Kanalabtastdauer-Zeitspanne beginnt, wobei das Weiterverwenden des ersten Anwärterkanals für die Betriebsdatensendung und für den Betriebsdatenempfang bei einer Kanalumschalt-Startzeit plus einer Kanalumschalt-Ausregelzeitspanne plus einer Abtast-Ausregelzeitspanne plus einer Kanalabtastdauer-Zeitspanne beginnt, wobei das sofortige Umschalten zu dem zweiten Anwärterkanal für die Betriebsdatensendung bei einer Kanalumschalt-Startzeit plus einer Kanalumschalt-Ausregelzeitspanne plus einer Abtast-Ausregelzeitspanne plus einer Kanalabtastdauer-Zeitspanne beginnt und wobei der Empfang und das Umschalten zu dem zweiten Anwärterkanal für die Betriebsdatensendung und für den Betriebsdatenempfang nach einer vorgegebenen Zeitspanne bei einer Kanalumschalt-Startzeit plus einer Kanalumschalt-Ausregelzeitspanne plus einer Abtast-Ausregelzeitspanne plus einer Kanalabtastdauer-Zeitspanne beginnt.

7. Verfahren nach Anspruch 4, bei dem das Senden der Umschaltabbruch-Steuernachricht während einer Kanalumschalt-Ausregelzeitspanne stattfindet.

8. Verfahren nach Anspruch 5, bei dem das Senden der Umschaltabbruch-Steuernachricht während einer Kanalabtastdauer-Zeitspanne stattfindet.

9. Verfahren nach Anspruch 1, bei dem die Schritte durch eine Umschalt- und Abtaststeuernachricht initiiert und gesteuert werden.

10. Verfahren nach Anspruch 4, bei dem die Umschaltabbruch-Steuernachricht die zuvor gesendete Umschalt- und Abtaststeuernachricht und irgendwelche nicht ausgeführten Schritte, die sich aus der zuvor gesendeten Umschalt- und Abtaststeuernachricht ergeben, abbricht.

11. Verfahren nach Anspruch 5, bei dem die Umschaltabbruch-Steuernachricht das Umschalten zurück zu dem vorhergehenden Betriebskanal abbricht.

12. Vorrichtung zum Abtasten der Kanalverfügbarkeit in einem drahtlosen Netz, wobei die Vorrichtung umfasst:
Mittel zum Umschalten von einem vorhergehenden Betriebskanal zu einem ersten Anwärterkanal für die Betriebsdatensendung und für den Betriebsdatenempfang; wobei der erste Anwärterkanal verfügbar ist;
Mittel zum Abtasten des vorhergehenden Betriebskanals auf Verfügbarkeit;
Mittel zum Bestimmen, ob der vorhergehende Betriebskanal verfügbar ist;
Mittel zum Zurückschalten zu dem vorhergehenden Betriebskanal, falls der vorhergehende Betriebskanal verfügbar ist; und
Mittel, um entweder den ersten Anwärterkanal für die Betriebsdatensendung und für den Betriebsdatenempfang weiterzuverwenden oder nach einer vorgegebenen Zeitspanne zu einem zweiten Anwärterkanal für die Betriebsdatensendung und für den Betriebsdatenempfang umzuschalten, falls der vorhergehende Betriebskanal nicht verfügbar ist.

13. Vorrichtung nach Anspruch 12, die ferner Mittel zum Empfangen eines Kanalabtastberichts für den vorhergehenden Betriebskanal auf dem ersten Anwärterkanal umfasst.

14. Vorrichtung nach Anspruch 12, die ferner umfasst:
Mittel zum Senden eines Umschalt- und Abtaststeuersignals;
Mittel zum Abtasten des ersten Anwärterkanals auf Verfügbarkeit; und
Mittel zum Bestimmen, ob der erste Anwärterkanal verfügbar ist.

15. Vorrichtung nach Anspruch 14, die, falls der erste Anwärterkanal nicht verfügbar ist, ferner umfasst:
Mittel zum Senden eines Umschaltabbruch-Steuersignals;
Mittel zum Auswählen eines zweiten Anwärterkanals;
Mittel zum Zulassen des Abtastens des vorhergehenden Betriebskanals durch Ausführen entweder des Umschaltens zu dem zweiten Anwärterkanal für die Betriebsdatensendung und für den Betriebsdatenempfang oder des Festsetzens einer Ruhezeit für das Abtasten des vorhergehenden Betriebskanals.

16. Vorrichtung nach Anspruch 12, die ferner Mittel zum Senden eines Umschaltabbruch-Steuersignals zum Abbrechen des Zurückschaltens zu dem vorhergehenden Betriebskanal-Steuersignal umfasst, falls der vorhergehende Betriebskanal nicht verfügbar ist.

17. Vorrichtung nach Anspruch 12, bei der die Mittel durch ein Umschalt- und Abtaststeuersignal initiiert und gesteuert werden.

18. Vorrichtung nach Anspruch 15, bei der das Umschaltabbruch-Steuersignal das zuvor gesendete Umschalt- und Abtaststeuersignal und irgendwelche nicht ausgeführten Aktionen, die sich aus dem zuvor gesendeten Umschalt- und Abtaststeuersignal ergeben, abbricht.

19. Vorrichtung nach Anspruch 16, bei der das Umschaltabbruch-Steuersignal das Zurückschalten zu dem vorhergehenden Betriebskanal abbricht.

## Revendications

1. Procédé de détection de disponibilité de canal dans un réseau sans fil, ledit procédé comprenant :
une commutation à partir d'un canal de fonctionnement précédent vers un premier canal candidat pour une transmission et une réception (105) de données de fonctionnement, ledit premier canal candidat étant disponible ;
une détection dudit canal de fonctionnement précédent pour une disponibilité (110) ;
une détermination si ledit canal de fonctionnement précédent est disponible (115) ;
si ledit canal de fonctionnement précédent est disponible, un retour audit canal de fonctionnement précédent (120) ; et
si ledit canal de fonctionnement précédent n'est pas disponible, une poursuite de l'utilisation dudit premier canal candidat pour une transmission et une réception de données de fonctionnement ou une commutation vers un deuxième canal candidat pour une transmission et une réception de données de fonctionnement après une période prédéterminée (125).

2. Procédé selon la revendication 1, comprenant en outre une réception d'un rapport de détection de canal pour ledit canal de fonctionnement précédent sur ledit premier canal candidat.

3. Procédé selon la revendication 1, comprenant en outre :
une transmission d'un message de commande de commutation et de détection ;
une détection dudit premier canal candidat pour une disponibilité ; et
une détermination si ledit premier canal candidat est disponible.

4. Procédé selon la revendication 3, où si ledit premier canal candidat n'est pas disponible, comprenant en outre :
une transmission d'un message de commande d'annulation de commutation ;
une sélection d'un deuxième canal candidat ;
une autorisation de la détection dudit canal de fonctionnement précédent via la réalisation d'une commutation vers ledit deuxième canal candidat pour une transmission et une réception de données de fonctionnement ou une planification d'une période silencieuse pour détecter ledit canal de fonctionnement précédent.

5. Procédé selon la revendication 1, comprenant en outre une transmission d'un message de commande d'annulation de commutation pour annuler le retour audit canal de fonctionnement précédent, si ledit canal de fonctionnement précédent n'est pas disponible.

6. Procédé selon la revendication 3, où ladite détection dudit premier canal candidat débute à une heure de démarrage de commutation de canal et continue sur une période de réglage de commutation de canal, où ladite commutation vers ledit premier canal candidat débute à une heure de démarrage de commutation de canal plus une période de réglage de commutation de canal, où ladite détection dudit canal de fonctionnement précédent débute à une heure de démarrage de commutation de canal plus une période de réglage de commutation de canal plus une période de réglage de détection et continue sur une période de durée de détection de canal, où ledit retour audit canal de fonctionnement précédent débute à une heure de démarrage de commutation de canal plus une période de réglage de commutation de canal plus une période de réglage de détection plus une période de durée de détection de canal, où ladite poursuite de l'utilisation dudit premier canal candidat pour une transmission et une réception de données de fonctionnement débute à une heure de démarrage de commutation de canal plus une période de réglage de commutation de canal plus une période de réglage de détection plus une période de durée de détection de canal, où ladite commutation immédiate vers ledit deuxième canal candidat pour une transmission de données de fonctionnement débute à une heure de démarrage de commutation de canal plus une période de réglage de commutation de canal plus une période de réglage de détection plus une période de durée de détection de canal et, où ladite réception et la commutation vers ledit deuxième canal candidat pour une transmission et une réception de données de fonctionnement après une période prédéterminée débute à une heure de démarrage de commutation de canal plus une période de réglage de commutation de canal plus une période de réglage de détection plus une période de durée de détection de canal.

7. Procédé selon la revendication 4, où ladite transmission dudit message de commande d'annulation de commutation lors d'une période de réglage de commutation de canal.

8. Procédé selon la revendication 5, où ladite transmission dudit message de commande d'annulation de commutation lors d'une période de durée de détection de canal.

9. Procédé selon la revendication 1, où lesdites étapes sont initiées et commandées par un message de commande de commutation et de détection.

10. Procédé selon la revendication 4, où ledit message de commande d'annulation de commutation annule ledit message de commande de commutation et de détection transmis précédemment et toute étape non exécutée résultant dudit message de commande de commutation et de détection transmis précédemment.

11. Procédé selon la revendication 5, où ledit message de commande d'annulation de commutation annule ledit retour audit canal de fonctionnement précédent.

12. Appareil de détection de disponibilité de canal dans un réseau sans fil, comprenant :
un moyen de commutation à partir d'un canal de fonctionnement précédent vers un premier canal candidat pour une transmission et une réception de données de fonctionnement, ledit premier canal candidat étant disponible ;
un moyen de détection dudit canal de fonctionnement précédent pour une disponibilité ;
un moyen de détermination si ledit canal de fonctionnement précédent est disponible ;
un moyen de retour audit canal de fonctionnement précédent si ledit canal de fonctionnement précédent est disponible ; et
un moyen de poursuite de l'utilisation dudit premier canal candidat pour une transmission et une réception de données de fonctionnement ou une commutation vers un deuxième canal candidat pour une transmission et une réception de données de fonctionnement après une période prédéterminée, si ledit canal de fonctionnement précédent n'est pas disponible.

13. Appareil selon la revendication 12, comprenant en outre un moyen de réception d'un rapport de détection de canal pour ledit canal de fonctionnement précédent sur ledit premier canal candidat.

14. Appareil selon la revendication 12, comprenant en outre :
un moyen de transmission d'un signal de commande de commutation et de détection ;
un moyen de détection dudit premier canal candidat pour une disponibilité ; et
un moyen de détermination si ledit premier canal candidat est disponible.

15. Appareil selon la revendication 14, où si ledit premier canal candidat n'est pas disponible, comprenant en outre :
un moyen de transmission d'un signal de commande d'annulation de commutation ;
un moyen de sélection d'un deuxième canal candidat ;
un moyen d'autorisation de la détection dudit canal de fonctionnement précédent via la réalisation d'une commutation vers ledit deuxième canal candidat pour une transmission et une réception de données de fonctionnement ou une planification d'une période silencieuse pour détecter ledit canal de fonctionnement précédent.

16. Appareil selon la revendication 12, comprenant en outre un moyen de transmission d'un signal de commande d'annulation de commutation pour annuler le retour audit signal de commande de canal de fonctionnement précédent, si ledit canal de fonctionnement précédent n'est pas disponible.

17. Appareil selon la revendication 12, où lesdits moyens sont initiés et commandés par un signal de commande de commutation et de détection.

18. Appareil selon la revendication 15, où ledit signal de commande d'annulation de commutation annule ledit signal de commande de commutation et de détection transmis précédemment et toute action non exécutée résultant dudit signal de commande de commutation et de détection transmis précédemment.

19. Appareil selon la revendication 16, où ledit signal de commande d'annulation de commutation annule ledit retour audit canal de fonctionnement précédent.
